**Europäisches Patentamt**

**European Patent Office**

**Office européen des brevets**

(19)

(11) Veröffentlichungsnummer : **0 034 830**
**B1**

(12) **EUROPÄISCHE PATENTSCHRIFT**

(45) Veröffentlichungstag der Patentschrift :
**11.04.84**

(21) Anmeldenummer : **81101318.4**

(22) Anmeldetag : **24.02.81**

(51) Int. Cl.³ : **B 23 D 23/00**

(54) **Schere für stabförmiges Schneidgut, insbesondere von Walzgut.**

(30) Priorität : **29.04.80 DE 3016528**
**26.02.80 DE 3007099**

(43) Veröffentlichungstag der Anmeldung :
**02.09.81 Patentblatt 81/35**

(45) Bekanntmachung des Hinweises auf die Patenterteilung : **11.04.84 Patentblatt 84/15**

(84) Benannte Vertragsstaaten :
**AT BE CH DE FR GB IT LI LU NL SE**

(56) Entgegenhaltungen :
**CH-A- 255 171**
**DE-C- 95 397**
**DE-C- 437 853**
**DE-C- 1 154 994**
**GB-A- 928 817**
**US-A- 1 559 082**
**US-A- 3 387 523**
**US-A- 3 468 206**
**US-A- 3 866 522**

(73) Patentinhaber : **Mecapec S.A.**
**Postfach**
**CH-8716 Schmerikon (CH)**

(72) Erfinder : **Bieri, Hans**
**Oberrickstrasse**
**CH-8330 Pfäffikon (CH)**
Erfinder : **Rimmele, Karl**
**St. Gallerstrasse**
**CH-8716 Schmerikon (CH)**

(74) Vertreter : **Vièl, Georg, Dipl.-Ing.**
**Am Zimmerplatz 16**
**D-6606 Saarbrücken-Gersweiler (DE)**

## Schere für stabförmiges Schneidgut, insbesondere von Walzgut

Die Erfindung bezieht sich auf eine Schere für stabförmiges Schneidgut, insbesondere zum Ablängen oder Auftrennen von stabförmigem Walzgut, insbesondere Stahlknüppeln, nach dem Oberbegriff des Anspruchs 1.

Eine Schere der genannten Art ist bekannt aus der US-A 1.559.082. Dort ist die Messerträgeranordnung frei schwenkbar gelagert und stützt sich im Ruhezustand, d. h. bei vom Stab mit Abstand angeordneten Messern, mit dem unteren Messerträger unmittelbar an einer gestellfesten Auflage ab. Nach dem Einleiten der Schnittbewegung, d. h. der Relativbewegung der Messerträger gegeneinander, wird die gesamte Messerträgeranordnung fortschreitend verschwenkt, wobei der untere Messerträger zunächst in Berührung mit der Auflage verbleibt, aber gleichwohl eine Schwenk- und Relativbewegung zum Stab bzw. zum Gestell ausführt. Nachdem das Obermesser zur Anlage am Stab gekommen ist, hebt sich der untere Messerträger von der gestellfesten Auflage ab. Die Messerträgeranordnung stützt sich dann nur noch am Stab einerseits und am Schwenklager andererseits ab, so dass letzteres bzw. die Zuführvorrichtung beträchtlichen Gewichtsbelastungen ausgesetzt sind. Nach Anlegen auch des Untermessers am Stab beginnt der Schnittvorgang, wobei wegen der freien Beweglichkeit der Messerträgeranordnung kein definiertes, sondern nur ein von den Zufälligkeiten der Scherkraftverteilung über den Stabquerschnitt abhängiges Verhältnis der Teilscherwege des Ober- und Untermessers gegeben ist. Insbesondere ist also mit einer solchen Schere jene Arbeitsweise nicht möglich, bei welcher ein Messer in Anlage am Stab festgestellt und während des Schnittvorganges nur das andere Messer relativ zum Stab bzw. Gestell bewegt wird.

Aufgabe der Erfindung ist daher die Schaffung einer Stabschere, die eine definierte Einstellung der Messerausgangslage entsprechend unterschiedlichen Stabquerschnitten oder Zuführhöhen ebenso wie definierte Schnittwegverhältnisse beider Messer einfach zu verwirklichen gestattet. Die erfindungsgemässe Lösung dieser Aufgabe bestimmt sich in Verbindung mit den eingangs genannten Merkmalen durch die Kennzeichnungsmerkmale des Anspruchs 1.

Die schwenkeinstellbare Ausführung der Messerträgeranordnung ermöglicht auf einfache Weise die Einhaltung definierter Schnittanfangsbedingungen und Messerstellungen bezüglich des Stabquerschnitts auch bei unterschiedlichen Querschnitten. Sodann ergeben sich durch die Kupplung des Niederhalters mit einem Messerträger während der Schnittbewegung definierte Teilschnittwege bezüglich des gestellfesten Stabquerschnitts, insbesondere im gewünschten Fall eine im wesentlichen einseitige Zuweisung des gesamten Schnitthubes zu dem mit dem Niederhalter gekuppelten Messerträger, während das Messer des anderen Messerträgers in bezug auf den feststehenden Stabquerschnitt ruhend in Anlagestellung verharrt.

Nach einer besonderen Weiterbildung der Erfindung wird der bezüglich der Stab-Zuführeinrichtung bzw. des Maschinenrahmens bewegliche Messerträger in einem gegen das Arbeitslager versetzten Schwenklager angeordnet. Hierdurch ergibt sich unter der Wirkung des genannten Schwenk-Feststellantriebes eine Verstellbewegung bzw. Höhenverstellung beider Messerträger mit einem Bewegungsradius, der unabhängig von der schnitt-technologischen bedingten Wahl des Messerträger-Hebelarmes, d. h. des Abstandes zwischen Schnittstelle und Arbeitslager bemessen und zur Geringhaltung der mit der Schwenkeinstellung verbundenen Winkeländerungen der Messer insbesondere vergrössert werden kann. Eine Anordnung der Schnittstelle im Bereich zwischen dem Arbeitslager und der Angriffsstelle des Arbeitsantriebes an einem Messerträger oder an beiden Trägern bietet in diesem Zusammenhang den Vorteil, dass ein kraftübersetzendes Hebelarmverhältnis bei vergleichsweise geringer Beanspruchung der aus beiden Messerträgern mit Arbeitsantrieb bestehenden Baugruppe durch innere Biegemomente verwirklicht werden kann. Die Schnittkräfte und die von ihnen hervorgerufenen Biegemomente bleiben im übrigen auf diese Baugruppe beschränkt und werden nicht durch das Maschinengestell übertragen, weshalb letzteres vergleichsweise geringen Beanspruchungen unterliegt und als Leichtkonstruktion ausgeführt werden kann.

Eine wesentliche Weiterbildung der Erfindung sieht vor, dass die Schnittstelle einerseits und das Schwenklager der Messerträgeranordnung andererseits bezüglich des Arbeitslagers wenigstens annähernd zueinander gegenüberliegend angeordnet sind. Hierdurch ergeben sich besondere Vorteile hinsichtlich des Schneidvorganges bzw. hinsichtlich der Stellungsanpassung der Messer für unterschiedliche Profilhöhen des Schneidgutes, und zwar in folgender Weise :

Wesentlich für den einwandfreien Ablauf des Schneidvorganges ist im allgemeinen eine möglichst gleichmässige Anlage der schneidenden Messerkanten an den Profilflächen des Schneidgutes bei Schnittbeginn. Dies gilt insbesondere auch im Hinblick auf die oft verlangte, möglichst geringe Verschiebung bzw. Kraftbeaufschlagung des stabförmigen Schneidgutes in Richtung quer zur Stabachse. Bei vergleichsweise einfachen Profilformen, beispielsweise quadratischen oder rechteckigen Knüppelquerschnitten, kann dies im allgemeinen mit Hilfe von der Querschnittform angepassten Ober- und Untermesser erreicht werden. Für schwenkbare Messerträger und eine entsprechende, kreisbogenförmige Messerbewegung bei Scheren der vorliegenden Gattung ist die gleichmässige Anlage der Messerkanten jedoch zunächst nur für eine bestimmte Winkelstellung der beiden Messerträger, d. h. für eine bestimmte Profilhöhe des Schneidgutes gegeben, während für andere Querschnittshöhen Winkelabweichungen zwischen den Messerkanten und den Profilflächen bei Schnittbeginn auftreten. Dies gilt auch für eine Arbeitsweise der Schere, wobei zunächst eines der Messer, beispielsweise das Obermesser, mit seinen Schneidkanten zur Anlage am Profil gebracht wird und beim anschliessenden Schneidvorgang eine feste Stellung bezüglich des Maschinengestells bzw. bezüglich der Stab-Zuführeinrichtung beibehält, während das andere Messer, beispielsweise das Untermesser, den eigentlichen Schneidhub ausführt. Das erste Messer sei im folgenden als Anstellmesser, das zweite als Hubmesser bezeichnet. Ersteres nimmt also bereits vor dem Schneidvorgang seine bei Schnittbeginn unveränderte Winkelstellung ein, während letzteres seine bei Schnittbeginn wirksame Winkelstellung während der Hubbewegung durchläuft. In jedem Fall ist eine möglichst genaue Anlage bzw. Winkelübereinstimmung zwischen den Messerkanten und den Profilflächen bei Schnittbeginn erwünscht. Dies lässt sich bei vorliegenden Schwenk-Messerträgern vollständig durch eine Messerverstellung bezüglich eines Trägers in der Weise erreichen, dass die Winkelstellungen der Messerträger unabhängig von der Schneidgut-Profilhöhe unverändert bleiben. Hierauf gerichtete Weiterbildungen der Erfindung werden weiter unten noch näher erläutert. Jedenfalls ist aber eine möglichst geringe Aenderung der Messerkanten-Winkelstellung bei Schnittbeginn in Bezug auf unterschiedliche Profilhöhen erwünscht.

Letzteres wird durch die vorgenannte, bezüglich des Arbeitslagers einander gegenüberliegende bzw. diametrale Anordnung der Schnittstelle einerseits und des Schwenklagers der Messerträgeranordnung andererseits aus folgenden Gründen erreicht :

Bei vorgegebenem Maxialabstand der jeweils aussenliegenden Schwenkachsen, was im wesentlichen einer vorgegebenen Gesamt-Maschinenbreite entspricht, ergibt sich im Vergleich zu andersartigen Achsanordnungen ein grösserer Achsabstand zwischen dem Schwenklager der Messerträgeranordnung einerseits und der Schnittstelle andererseits, d. h. ein vergleichsweise grosser Radius für die kreisbogenförmige Einstellbewegung des Anstellmessers für das Anlegen am Profil des Schneidgutes und ausserdem ergibt sich für die Schnittbeginn-Winkelstellung des Hubmessers in bezug auf das Anstellmesser und damit auch in Bezug auf das Profil des Schneidgutes eine geringere Aenderung, weil für eine gegebene Profilhöhenänderung der entsprechende Verstellhub der Arbeitslagerachse vergleichsweise gering ist.

Gemäss einer weiteren bevorzugten Ausgestaltung der Erfindung ist vorgesehen, dass der Schwenk-Feststellantrieb der Messerträgeranordnung an einer Stelle der Messerträgeranordnung angreift, die bezüglich der Schnittstelle wenigstens annähernd gegenüberliegend zum Arbeitslager angeordnet ist. Dadurch ergibt sich eine optimale Ausnutzung der verfügbaren Maschinenbreite für die im allgemeinen anzustrebende, grosse Bemessung des wirksamen Hebelarmes für den Schwenk-Feststellantrieb.

Nach einer weiteren bevorzugten Ausführungsform der Erfindung werden die Messerträger vorzugsweise unmittelbar nebeinanderliegend durch ein Arbeitslager miteinander drehbar verbunden und gegen die in Stablängsrichtung im Sinne einer Trennung der Messer wirkende Axialkomponente der Schnittkraft abgestützt. Dadurch wird eine spielfreie Messerkonstruktion mit einwandfreier Wirkungsweise erleichtert. Zweckmässig wird dabei das Arbeitslager der Messerträger als diese Axialkomponenten aufnehmendes Axialdrucklager ausgebildet.

Zur Sicherung der Spielfreiheit zwischen den Messern auch unter schwerer Beanspruchung kann gegebenenfalls eine in Richtung gegen die axiale Messertrennung wirkende Kippvorspannung der Messer gegeneinander vorgesehen werden, wobei geeignete Anschläge für die Einhaltung des erforderlichen axialen Mindestabstandes der Messerkanten sorgen. Diese Vorspannung muss jedenfalls grösser als maximal auftretende, in Trennrichtung wirkende Axialkomponente der Schnittkraft bemessen werden.

Im Gegensatz dazu zielt jedoch eine wesentliche Weiterbildung der Erfindung darauf ab, diese Abhängigkeit der Vorspannkraft vom Schnittdruck und seiner in Messer-Trennrichtung wirkenden Axialkomponente zu überwinden. Hierzu wird umgekehrt zur vorgenannten Lösung eine in Messer-Trennrichtung wirkende Kippvorspannung der Messer gegeneinander vorgesehen. Geeignete Anschlagmittel, welche die axiale Messertrennung begrenzen, können auch in diesem Fall auf einfache Weise für die Einhaltung des erforderlichen Messerspaltes sorgen. Ein besonderer Vorteil dieser Ausführung besteht darin, dass die axiale Schnittkraftkomponente von den auf einfache Weise robust auszubildenden Anschlagmitteln aufgenommen wird, während die Vorspannung wesentlich geringer bemessen werden kann, was zu einer Vereinfachung der zugehörigen elastischen oder fluidischen Anpressmittel führt.

Als Weiterbildung der Erfindung wird der Niederhalter mit einem sich in Richtung parallel zur Stablängsrichtung wenigstens teilweise über die Breite des benachbarten Messerträgers gegen die Schnittebene erstreckenden Druckstück versehen. Eine solche Gestaltung des ausserhalb des Schnittbereiches gelagerten Niederhalters bedingt zwar gewisse Torsionsmomente infolge der an dem seitlich auskragenden Druckstück angreifenden Schnittkräfte. Diese Beanspruchung des Niederhalters lässt sich jedoch insbesondere bei der vorliegenden Scherenkonstruktion mit schwenkbaren Messerträgern und entsprechend schwenkbarem Niederhalter ohne Schwierigkeit aufnehmen. Dies gilt insbesondere auch für die Schwenklagerung des Niederhalters.

Weitere Vorteile der Erfindung werden anhand der in den Zeichnungen veranschaulichten Ausführungsbeispielen erläutert. Hierin zeigt :

Figur 1 eine schematische Ansicht einer Knüppelschere nach der Erfindung mit Blickrichtung parallel zur Längsrichtung des stabförmigen Schneidgutes,

Figur 2 einen Teilschnitt der Schere nach Fig. 1 gemäss der dort angegebenen Schnittebene II-II und

Figur 3 ein Ablaufschema des erfindungsgemässen Arbeitsverfahrens in aufeinanderfolgenden Schritten a) bis f), wobei jede dieser Arbeitsstufen in einer entsprechend bezeichneten Zeile von Fig. 3 dargestellt ist.

Figur 4 Eine Seitenansicht einer anderen Ausführung einer Knüppelschere nach der Erfindung mit Blickrichtung parallel zur Achse des stabförmigen Schneidgutes,

Figur 5 eine Draufsicht der Schere nach Fig. 4,

Figur 6 einen Teil-Axialschnitt gemäss Schnittebene A-A in Fig. 4 und zwar in grösserem Massstab, und

Figur 7 einen Teilschnitt gemäss Schnittebene B-B in Fig. 4, in einem Massstab entsprechend Fig. 6,

Figur 8 eine Seitenansicht einer Scherenausführung nach der Erfindung mit besonderer Schwenkachsenanordnung und

Figur 9 einen schematischen Schnitt einer erfindungsgemässen Scherenausführung mit besonders gestaltetem Niederhalter, mit vertikaler Schnittebene durch die Stabachse des Schneidgutes.

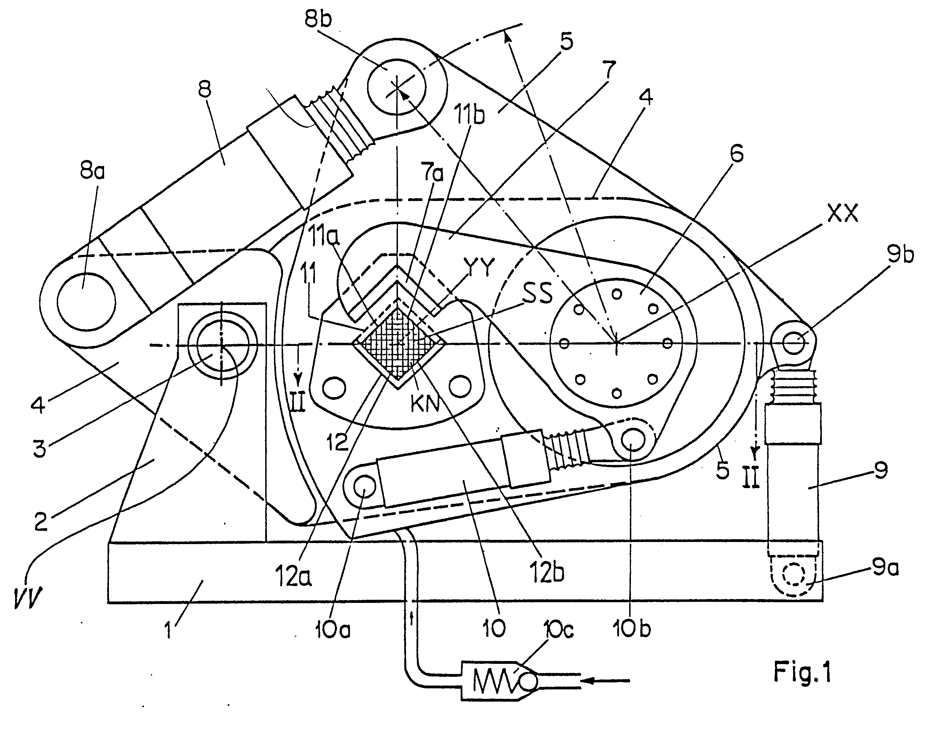

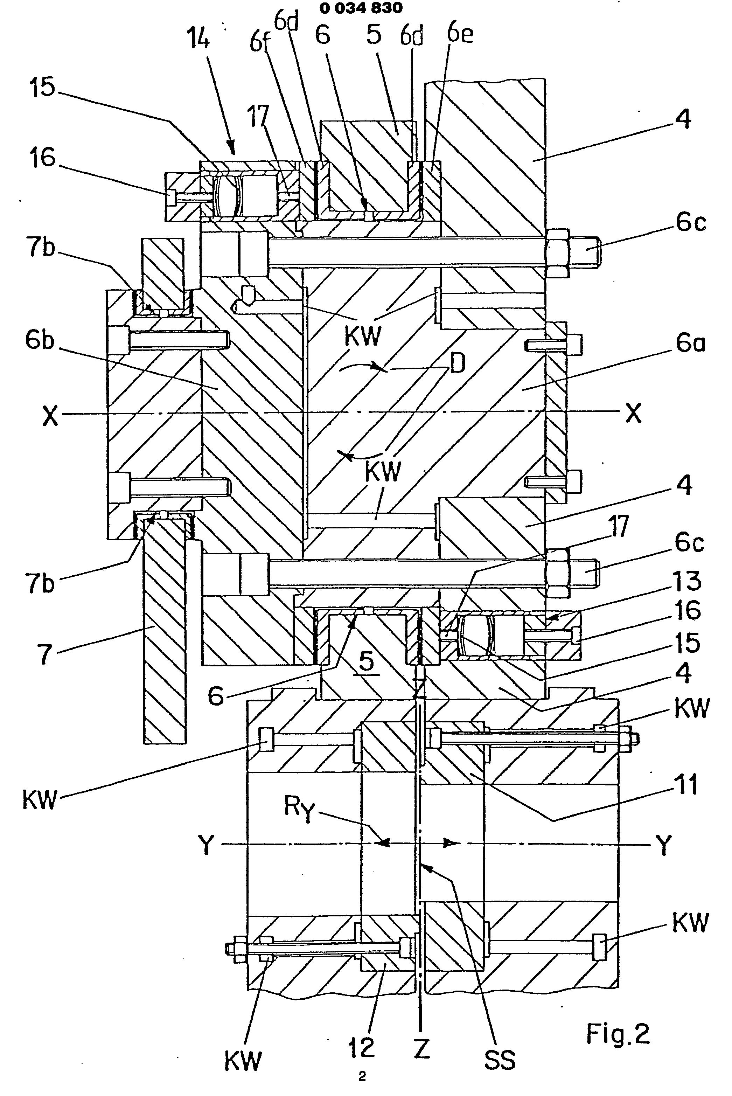

Fig. 1 zeigt den im wesentlichen aus einer Fundamentplatte bestehenden Maschinenraum 1 mit einem Haupt-Lagerblock 2, an dem ein erster Messerträger 4. mit einem Schwenklager 3 um eine Horizontalachse VV, d. h. in einer Vertikalebene beweglich gelagert ist. Unmittelbar neben dem ersten Messerträger 4 ist ein zweiter Messerträger 5 ebenfalls in einer Vertikalebene schwenkbar gelagert, und zwar mittels eines beide Messerträger verbindenden Arbeitslagers 6 mit horizontaler Achse XX, welches als robustes Axialdrucklager ausgebildet ist. Die Konstruktion dieses Lagers wird noch im einzelnen anhand von Fig. 2 erläutert. Die Messerträger 4 und 5 mit dem Arbeitslager 6 bilden eine vorstehend als Messerträgeranordnung bezeichnete Baueinheit, die um das Lager 3 schwenkbar ist.

Im Bereich einer zwischen dem Arbeitslager 6 und dem Schwenklager 3 angeordneten Schnittstelle SS, durch deren Mitte die Stabachse YY des Schneidgutes verläuft, bilden beide Messerträger Ausnehmungen für den Durchtritt eines im Querschnitt beispielsweise quadratischen Knüppels KN als stabförmiges Schneidgut. Die Schnittstelle SS wird durch zwei mit den beiden Messerträgern verdundene, ringförmige Messer 11 und 12 gebildet, deren erstes am Messerträger 4 sitzt und als Anstellmesser von oben am Knüppel angreift, während das andere am Messerträger 5 sitzt und als Hubmesser von unten am Knüppel angreift.

Jedes Messer weist zwei rechtwinklig zueinander angeordnete Schneidkanten 11a und 11b bzw. 12a und 12b auf, die den Querschnittseiten des Knüppels zugeordnet sind und bei der Schnittbewegung unter einem Winkel von etwa 45° an der Werkstückoberfläche angreifen.

Für die Arbeitsbewegung der beiden Messerträger gegeneinander ist ein als doppeltwirkender Fluidzylinder ausgebildeter Arbeitsantrieb 8 vorgesehen, der mit Gelenken 8a und 8b unmittelbar an den Messerträgern angreift. Für die Schwenkbewegung der Messerträgeranordnung um die Achse VV des Lagers 3 ist ein — ebenfalls als doppelt wirkender Fluidzylinder ausgebildeter Feststellantrieb 9 vorgesehen.

Ein weiteres vorteilhaftes Merkmal der in Fig. 1 dargestellten Konstruktion besteht darin, dass das Schwenklager 3 des Messerträgers 4 wenigstens annähernd in einer Ebene mit dieser Schnittstelle und der Achse XX des Arbeitslagers 6 angeordnet ist. Auf diese Weise ergeben sich trotz vergleichsweise geringen Abstandes zwischen dem Drehlager 3 und der Achse YY bei der Höhenverstellung nur geringe zusätzliche Horizontalverschiebungen der Schnittstelle.

Weiter ist es von Vorteil, dass der Feststellantrieb 9 des Messerträgers 4 mit dem Gelenk 9b an einer Stelle dieses Messerträgers angreift, die bezüglich der Schnittstelle SS auf der entgegengesetzten Seite des Arbeitslagers 6 bzw. des Drehlagers 3 angeordnet ist. Hierdurch ergibt sich eine vergleichsweise geringe Belastung des Antriebes 9 durch das Gewicht der schwenkbaren Baueinheit und eine hohe Einstellgenauigkeit mit vergleichsweise grossen Hüben des Antriebes 9.

In der aus Fig. 1 ersichtlichen Weise ist die Schere ferner mit einem Niederhalter 7 für die Abstützung des abzutrennenden Knüppelabschnittes gegen das Schnittkraftmoment versehen. Der Niederhalter greift mit einer dem Knüppelquerschnitt angepassten Klaue 7a an der gleichen Seite des Knüppels an wie das Messer 11, d. h. entgegengesetzt zum Messer 12, und ist demgemäss in bezug auf Fig. 1 an der Vorderseite der Messerträger-Baugruppe angeordnet, so dass sich eine Dreipunktabstützung gegen das Schnittkraftmoment ergibt. Der Niederhalter ist koaxial zum Arbeitslager 6 um die Achse XX schwenkbar gelagert und mit einem Feststellantrieb 10, in Form eines doppeltwirkenden Fluidzylinders versehen. Letzterer greift mit Gelenken 10a und 10b am Messerträger 5 einerseits sowie am Niederhalter 7 andererseits an, wodurch der Niederhalter sammt Feststellantrieb in die Messerträgerbaugruppe einbezogen ist und damit an der Verstellbewegung des Anstellmessers, d. h. des Messerträgers 4, teilnimmt. Mittels des Antriebes 10 wird der Niederhalter an den Knüppel gefahren.

Weiterhin ist der Antrieb 10 mit einer Rücklaufsperre 10c in Form eines Rückschlagventils für das Fluid-Antriebmittel versehen, so dass die Klaue 7a nach Anlegen am Knüppel mit einer voreingestellten Anpresskraft in einer festen Lage bezüglich des Messerträgers 5 arretiert ist und damit anschliessend an der Arbeitsbewegung des Hubmessers teilnimmt. Zum Lösen des abgetrennten Stababschnitts nach Vollendung des Schnittes wird die Rücklaufsperre 10c in nicht näher dargestellter Weise aufgehoben, und der Niederhalter kann durch gegensinnige Beaufschlagung des Antriebes 10 (die entsprechende Druckmittelzufuhr und Umsteuerung ist ebenfalls als an sich üblich nicht dargestellt) bezüglich des Messerträgers 5 in seine Ausgangslage angehoben werden.

Wie aus Fig. 2 ersichtlich ist, sind die Messerträger 4 und 5 durch das Arbeitslager 6 miteinander unmittelbar verbunden und in Richtung der Achse YY im Bereich der Schnittstelle SS unmittelbar nebeneinanderliegend angeordnet. Die aus der in Richtung der Achse YY im Sinne einer gegenseitigen Trennung der Messer 11 und 12 wirkende Axialkomponente $R_y$ der Schnittkraft resultierenden Biegemomente innerhalb der Messerträgerbaugruppe werden dadurch vergleichsweise gering gehalten. Im übrigen sind die Messerträger gegen diese axiale Schnittkraftkomponente durch das Arbeitslager 6 abgestützt. Zur Geringhaltung zusätzlicher Trennkräfte und entsprechender Biegemomente sind die Angriffsstellen des Arbeitsantriebes 8 an den Messerträgern 4 und 5 durch Anordnung der Gelenke 8a und 8b annähernd in die in Fig. 2 angedeutete Schnittebene ZZ gelegt.

Die Ausbildung des Arbeitslagers 6 als robustes Axialdrucklager ist im einzelnen ebenfalls aus Fig. 2 ersichtlich. Hierzu ist ein kompakt ausgebildeter Achskörper 6a mit einem Axialansatz konzentrisch zur Achse XX in eine entsprechende Bohrung des Messerträgers 4 eingepasst und über eine Druckplatte 6b mittels den Schrauben 6c auf seiner bezüglich Fig. 2 rechten Stirnfläche mit dem Messerträger 4 verspannt. Auf dem Aussenumfang des Achskörpers 6a sitzen die den Messerträger 5 tragenden Lagerschalen des Arbeitslagers 6. Diese Lagerschalen sind an ihren äusseren Axialenden mit grossflächigen Stirnflanschen 6d versehen, die mit entsprechenden Stirnlagerscheiben 6e bzw. 6f auf der Seite des Messerträgers 4 bzw. der Druckplatte 6b im Sinne einer Axialführung und Axialabstützung zusammenwirken.

Im Beispielsfall ist für das Arbeitslager bzw. den Messerträger 5 in bezug auf den Messerträger 4 eine spielaufhebende, in Richtung einer gegenseitigen Axialtrennung der Messer 11 und 12 wirkende Kippvorspannung verwirklicht, und zwar mittels zweier parallel zur Achse XX wirkender und mit radialem Abstand von dieser Achse diametral gegenüberliegend angeordneter Anpressvorrichtungen 13 und 14. Unter der Wirkung dieser Anpressvorrichtungen wird der Messerträger 5 im Sinne des in Fig. 2 eingetragenen Drehpfeilpaares D verschwenkt, bis die entsprechenden Lagerflächen der Stirnflansche bzw. Stirnscheiben 6d und 6e zur gegenseitigen Anlage kommen. Diese Lagerflächen wirken somit als Anschläge zur Begrenzung der Kippbewegung in Richtung einer Messertrennung. Durch entsprechende axiale Dickenbemessung des Achskörpers 6a und entsprechende Axialstellung der Druckplatte 6b kann somit das erforderliche Axialspiel zwischen den Messern 11 und 12 hochgenau und fest eingestellt werden. Wie bereits in der Einleitung erwähnt, haben die Anpressvorrichtungen dabei nur eine vergleichsweise geringe Kraft aufzubringen, während die Schnittkräfte von den gross bemessenen axialen Lagerflächen aufgenommen werden.

Die Anpressvorrichtungen 13 und 14 weisen im Beispielsfall je ein Tellerfederpaket 15 mit einer Einstell-Vorspannschraube 16 auf, die parallel zur Achse XX wirkt und die entsprechend eingestellte, elastische Vorspannkraft durch einen Stössel 17 auf die jeweils gegenüberliegende Stirnlagerscheibe 6e bzw. 6f und damit durch den zugehörigen Stirnflansch 6d des Lagers 6 auf den Messerträger 5 im Sinne einer Kippbewegung gemäss Pfeilen D überträgt.

Wenn umgekehrt die in der Einleitung erörterte Möglichkeit einer gegen die axiale Messertrennung wirkenden Kippvorspannung ausgenutzt werden soll, so kann dies grundsätzlich mit einer entsprechenden Anordnung geschehen. Die Anpressvorrichtungen 13 und 14 sind dann sinngemäss auf den bezüglich der Anordnung nach Fig. 2 entgegengesetzten Seiten des Messerträgers 5 im Bereich des Lagers 6 anzuordnen, vomit sich eine Kippbewegung entgegengesetzt zu den Pfeilen D ergibt. Die erforderlichen Anschlagmittel zur Einstellung des axialen Mindestabstandes der Messerkanten können in gleicher Weise durch die Druckplatte 6b mit den axialwirkenden Tragelementen des Lagers 6 verwirklicht werden.

Die aus Fig. 2 ersichtliche, kompakte Anordnung der Messerträger und des Arbeitslagers in einer geschlossenen Baugruppe erleichtert die Ausbildung eines Kühlkanalsystems, wie es beim Betrieb einer Warmschere im Anschluss an eine Warmwalzeinrichtung, insbesondere für die Messer und 12, zweckmässig aber auch für das benachbarte Arbeitslager 6 vorgesehen wird. In der Darstellung sind an den entsprechenden Stellen der Messerträgerbaugruppe Kühlkanäle KW ersichtlich, über die eine unmittelbare Beaufschlagung der Messer 11 und 12 sowie auch des Achskörpers 6a und der Druckplatte 6b mit einem Kühlmittel ohne umfangreiche und störanfällige äussere Kühlmittelleitungen und Anschlüsse möglich ist.

Die erläuterte, robuste Konstruktion der Messerträgerbaugruppe und insbesondere des Arbeitslagers in Verbindung mit der Spieleinstellung bzw. Abstützung gegen die Messertrennkräfte ermöglicht die Bewältigung schwerer Schnittarbeiten mit grossen Schnittkräften in einer vergleichsweise leichten und platzsparenden Maschinenausführung. Hierzu können insbesondere auch vergleichsweise grosse Kraftübersetzungen innerhalb der Messerträgeranordnung mit entsprechenden Hebelarmverhältnis angewendet werden.

Dabei trägt zu der kompakten und verformungssteifen Ausführung der Schere nicht nur die Einbeziehung des Arbeitsantriebes 8 in die Messerträgerbaugruppe bei, sondern auch die aus Fig. 1 ersichtliche Anordnung der Achse XX des Arbeitslagers 6, der Knüppelachse YY bzw. der Schnittstelle SS des Gelenkes 8a als Angriffsstelle des Arbeitsantriebes am Messerträger 4 in einer Ebene. Eine solche Anordnung ergibt nämlich nicht nur kürzestmögliche Biegearmlängen innerhalb der genannten Baugruppe, sondern führt auch zu einer Verminderung der Kipp- und Verdrillmomente innerhalb der Messerträger bzw. der Baugruppe, wobei die innerhalb der Baugruppe wirkenden Beanspruchungen im wesentlichen vom Arbeitslager 6 aufzunehmen sind. Die vorliegende Konstruktion ermöglicht daher auch eine vergleichsweise geringe Beanspruchung des Arbeitslagers, was wiederum die in Fig. 2 bezeichnete, konstruktive Einbeziehung der Schwenklagerung 7b des Niederhalters 7 in die Baueinheit des Arbeitslagers begünstigt.

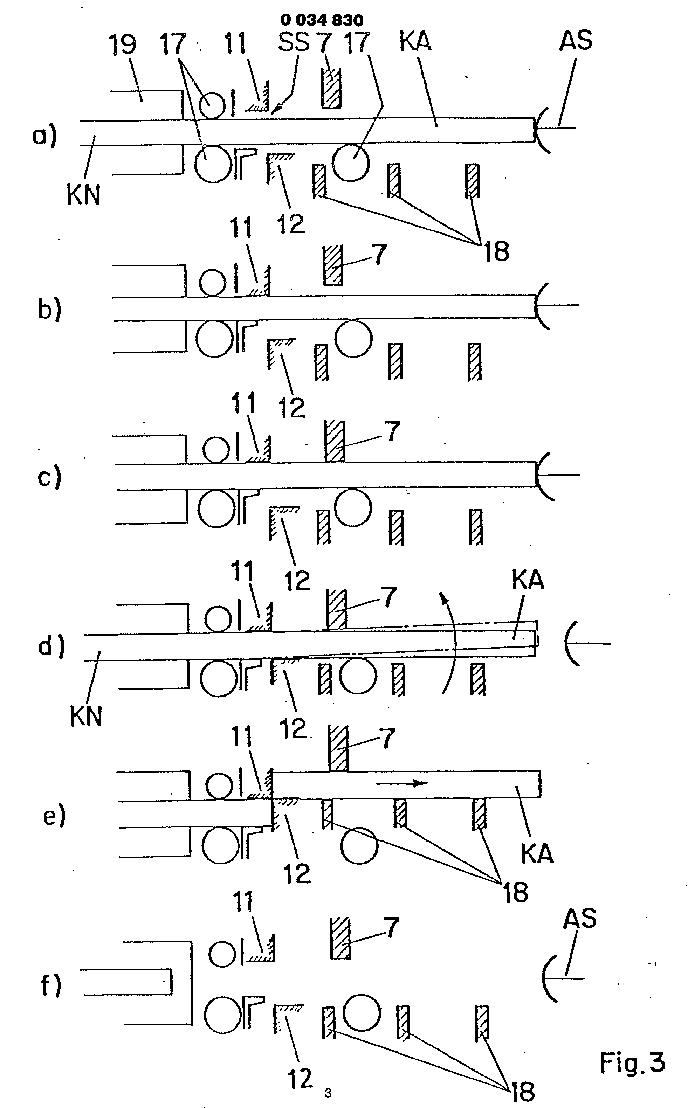

Das Arbeitsverfahren einer Schere nach Art der in Fig. 1 und 2 dargestellten Konstruktion wird nunmehr anhand von Fig. 3 erläutert.

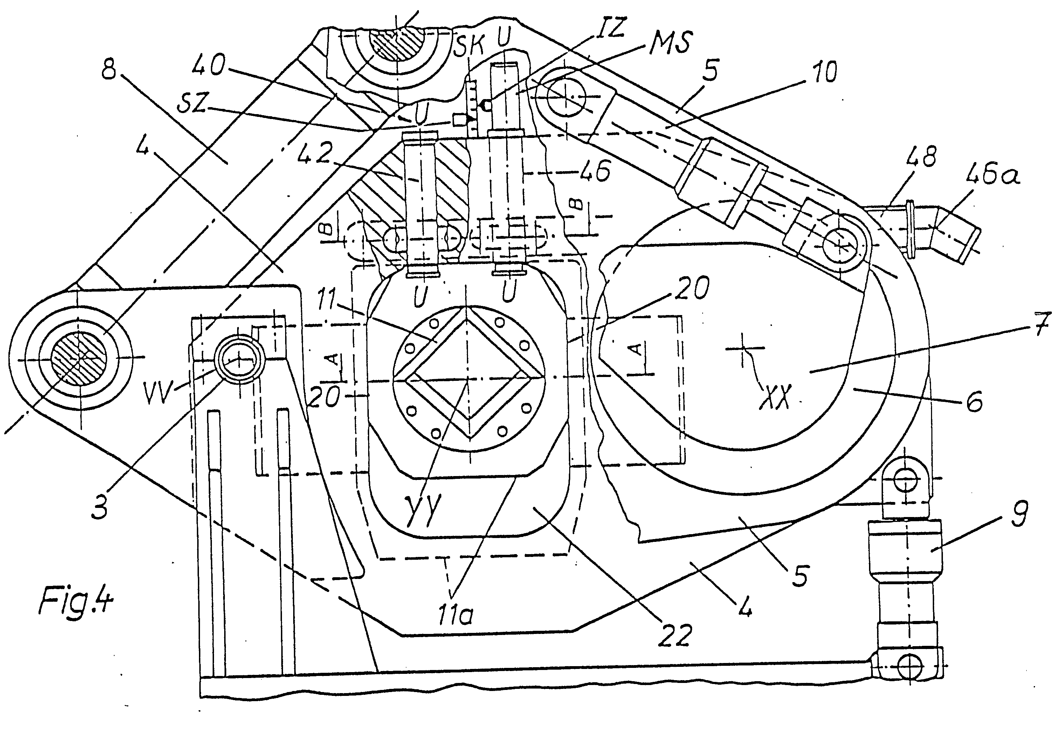

Hiernach wird zunächst gemäss Zeile a) aus einer Zuführeinrichtung 19, beispielsweise der Ausgangsstation einer Warmwalzeinrichtung, ein abzutrennender Knüppelabschnitt KA mittels Transport- und Tragrollen 17 durch die Schnittstelle SS zwischen den geöffneten Messern 11 und 12 vorgeschoben, und zwar zur Längenbestimmung gegen einen Anschlag 1S. Sodann wird gemäss Zeile b) durch entsprechende Antriebssteuerung des Messerträgers 4 das Anstellmesser 11 auf der bezüglich der Rollen 17 entgegengesetzten Seite zur Anlage am Knüppel gebracht. Anschliessend wird gemäss Zeile c) der Niederhalter 7 auf der gleichen Seite wie das Anstellmesser 11 zur Anlage an den abzutrennenden Knüppelabschnitt KA gebracht und sodann gemäss Zeile d) auf der zum Niederhalter 7 entgegengesetzten Seite durch entsprechende Antriebssteuerung die Arbeitsbewegung des Hubmessers 12 nach oben eingeleitet. Der Niederhalter wird sodann bis zum Beginn des Schneidvorganges, d. h. bis zum Anschlagen des Messers 12 am Knüppel, relativ zum Messerträger 5 im Gegenuhrzeigersinn verschwenkt und zunächst durch den Antrieb 10 (s. Fig. 1) am Knüppel gehalten. Anschliessend nimmt der Niederhalter an der Schnittbewegung des Messers 12 teil und wird dabei durch die Rücklaufsperre gegen den Knüppel abgestützt (s. Zeile e). Danach wird der Niederhalter gemäss Zeile f) unter Aufhebung der Rücklaufsperre vom Knüppel abgehoben und letzterer mittels einer Tragvorrichtung 18 aus der Schere entfernt. Für die Scherenausführung nach Fig. 4 bis 7 gilt folgendes (einander entsprechende Elemente sind mit der vorangehenden Ausführung übereinstimmend bezeichnet und nicht mehr näher erläutert):

Gemäss Fig. 4 ist das Anstellmesser 11 mit einem zugehörigen Messerhalter 11 a (der das Hubmesser 12 enthaltende Abschnitt des Messerträgers 5 ist hier zwecks Sichtbarkeit des Messers 11 mit seiner Lageeinstellungvorrichtung ausgebrochen dargestellt) an Führungsflächen 20 einer Ausnehmung 22 des Messerträgers 4 in Richtung der im wesentlichen vertikalen Arbeitsbewegung verschiebbar gelagert. Infolgedessen kann dieses Messer hinsichtlich seiner Ausgangslage an der Oberseite des Schneidgutes in einem Bereich verstellt werden, der den unterschiedlichen Profil- bzw. Querschnittshöhen des Schneidgutes entspricht. Dabei wird das stabförmige Schneidgut mit seiner Unterseite auf einer räumlich festen Zuführeinrichtung angefördert. Die Stabachse YY und die Oberseite des Schneidgutes nehmen also bei verschiedenen Querschnittshöhen unterschiedliche Höhenlagen bezüglich des Maschinengestells ein. Demgemäss muss auch das Messer 11 unterschiedliche Ausgangslagen für den Schneidvorgang einnehmen.

Für eine zweckentsprechende Einstellung der Ausgangslage des Messers 11 bei verschiedenen Querschnittshöhen käme grundsätzlich eine entsprechende Steuerung des Feststellantriebes 9 in Betracht. Besonders vorteilhaft ist jedoch die im vorliegenden Beispiel dargestellte Möglichkeit, für das Messer 11 eine eigene Lageeinstellung innerhalb des Messerträgers 4 vorzusehen. Der Feststellantrieb 9 und damit der Messerträger 4 selbst können dann für die verschiedenen Schneidgutquerschnitte eine unveränderte Ausgangslage beibehalten. Dies hat nicht nur den Vorteil einer unveränderten Ausgangslage des Gegenmessers 12 entsprechend der räumlich festen Lage der Schneidgutunterseite und damit den Vorteil einer relativ einfachen Steuerung des Arbeitsantriebes, sondern vereinfacht auch die Steuerung des Feststellantriebes 9. Ferner wird damit die Ausführung von Zusatzfunktionen durch den Antrieb 9 erleichtert, beispielsweise durch zusätzliche, vergleichsweise geringe Hubbewegungen des Messers 11 bei den aufeinanderfolgenden Schneidvorgängen für das Durchschieben eines neuen, abzutrennenden Stababschnittes.

Für die Relativverstellung des Messers 11 zum Messerträger 4 ist eine Einstellvorrichtung 40 vorgesehen, die einerseits am Messerträger 4 und andererseits am Messerhalter 11a angreift. Diese Einstellvorrichtung umfasst zwei im Gleichlauf angetriebene, mit ihren Achsen UU im wesentlichen parallel zur Arbeitsbewegung, d. h. vertikal angeordnete Einstellglieder 42 und 46 in Form von Schraubgetrieben mit Gewindespindeln 43 bzw. 47, die in entsprechenden Führungsbohrungen im Oberteil des Messerträgers 4 axial verschiebbar gelagert sind. Auf jeder Gewindespindel sitzt eine an ihrem Aussenumfang als Schneckenrad ausgebildete Mutter 43a bzw. 47a. Diese Muttern sind drehbar, jedoch gegen Axialverschiebung gesichert in entsprechenden Ausnehmungen des Messerträgers 4 gelagert, so dass eine Drehung dieser Muttern eine Längsverschiebung der Gewindespindeln und damit eine entsprechende Verschiebung des Messerhalters 11a in seiner Führung innerhalb des Messerträgers 4 zur Folge hat.

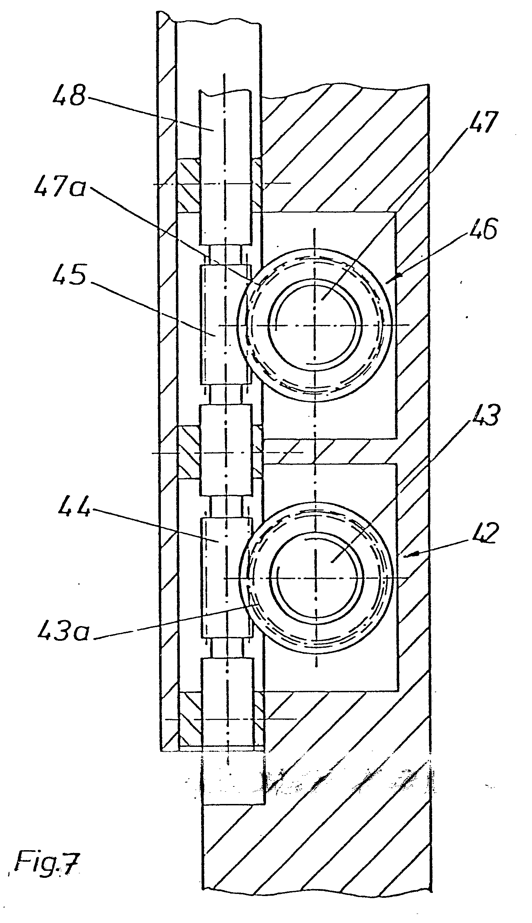

Die Achsen UU der beiden Einstellglieder 42 und 46 sind gemäss Fig. 4 zueinander parallel und mit gegenseitigem Abstand beiderseits der Vertikalmittelebene des stabförmigen Schneidgutes angeordnet. Der bereits erwähnte Gleichlaufantrieb der beiden Schraubgetriebe hat somit zur Folge, dass der Messerhalter 11a unabhängig von seiner Führung an den Flächen 20 des Messerträgers 4 bei der Verstellbewegung gegen unbeabsichtigtes Verschwenken gesichert ist. Der Gleichlauf der Schraubgetriebe wird in der aus Fig. 7 ersichtlichen Weise durch Koppelung der beiden Schraubgetriebe mit einem gemeinsamen Betätigungsorgan 48 in Form einer Einstellwelle erreicht, die ihrerseits zwei mit den Schneckenradverzahnungen am Umfang der Muttern 43a und 47a durch fluchtende Schneckengewinde-Abschnitte 44 und 45 im Eingriff steht.

Das Betätigungsorgan kann von Hand oder — beispielsweise über ein Kardangelenk 46a gemäss Fig. 4 — durch einen nicht dargestellten Stellmotor oder dergleichen im Sinne einer übergeordneten Programmsteuerung angetrieben werden.

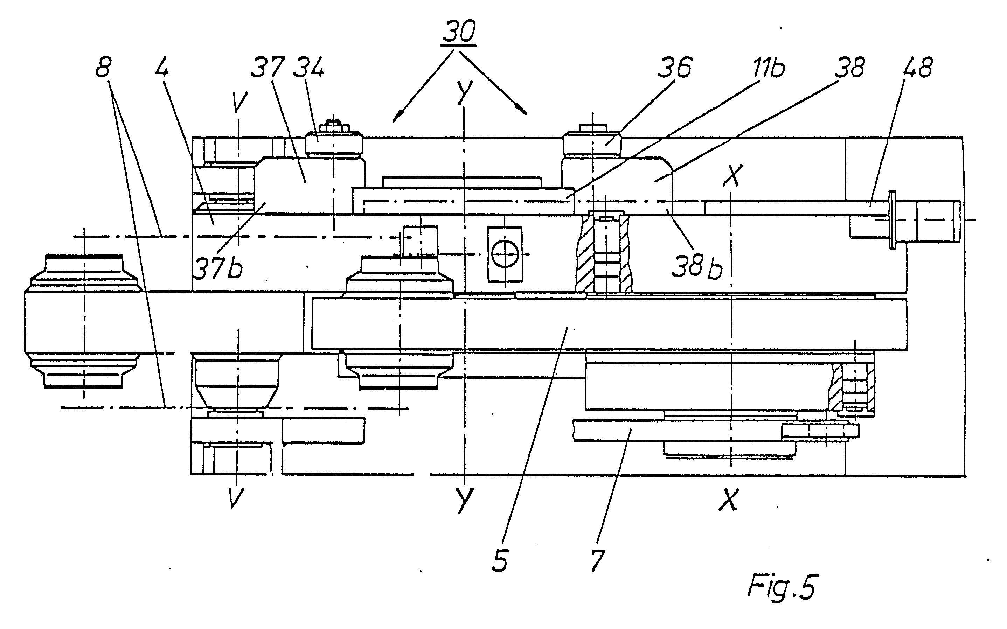

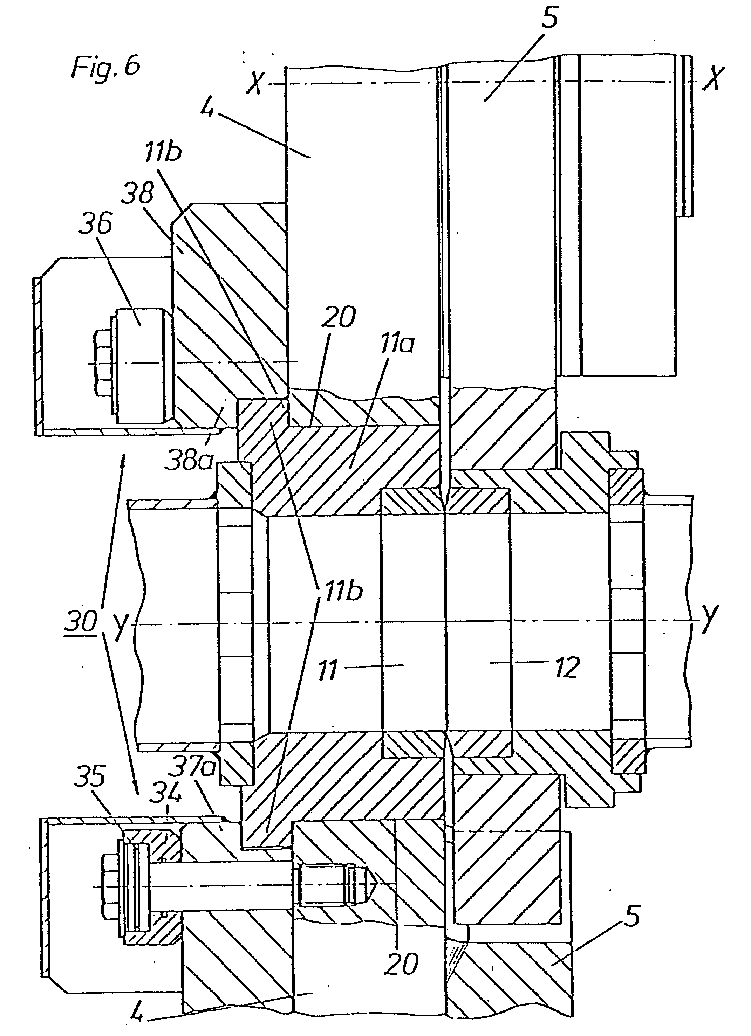

Im Betriebszustand wird der Messerhalter 11a in der jeweils eingestellten Ausgangslage des Messers 11 durch eine Klemmvorrichtung 30 festgehalten, deren Aufbau im einzelnen aus Fig. 5 und 6 ersichtlich ist (in Fig. 5 sind die Hydraulikzylinder der Arbeitsantriebes 3 der Uebersichtlichkeit halber nur noch durch strichpunktierte Achslinien veranschaulicht).

Die Klemmvorrichtung 30 umfasst zwei Klemmglieder 34 und 36 in Form von Hydraulikzylindern für geringe Hub, die in der aus Fig. 4 ersichtlichen Weise diametral beiderseits der Ausnehmung 22 am Messerträger 4 angeordnet sind, und zwar an dessen Rückseite. In Fig. 6 ist der Aufbau des Klemmgliedes 34 im Schnitt dargestellt. Der Kolben 35 des Zylinders sitzt danach am Kopf eines Stehbolzens 35a, der in den Messerträger 4 eingeschraubt ist und die Bohrung einer Klemmbacke 37 durchgreift. Eine entsprechende Anordnung mit Klemmbacke 38 ist für das Klemmglied 36 vorgesehen. Durch Druckbeaufschlagung bzw.. Druckentlastung über nicht dargestellte Leitungen und Steuerventile werden die Klemmbacken in Richtung gegen die Rückseite des Messerträgers 4 gepresst bzw. freigegeben. Beim Anpressen stützen sich die nach innen vorstehenden Schultern 37a bzw. 38a der Klemmbacken an einem rückwärtigen Bund 11b des Messerhalters 11a ab und arretieren diesen kraftschlüssig am Messerträger 4. Durch diese diametrale Abstützung ergibt sich eine sichere Aufnahme der beträchtlichen Schnittquerkräfte.

Bei der Scherenausführung nach Fig. 4 ist ferner für die Verstellbewegung des Messers 11 in Bezug auf den zugehörigen Messerträger 4 eine Stellungs-Messeinrichtung MS vorgesehen, die beispielsweise mit der Gewindespindel des Einstellgliedes 46 gekuppelt ist und eine Anzeigevorrichtung mit einem Stellungs-Istwertzeiger IZ sowie einer zugehörigen Stellungsskala SK umfasst. Ferner ist an der Skala ein einstellbarer Sollwertzeiger SZ angebracht, mittels dessen die für eine bestimmte Profilhöhe geeignete Höheneinstellung des Messers in Bezug auf den Messerträger markiert werden kann. Gegebenenfalls empfielt es sich, mit Hilfe an sich üblicher Kontaktglieder oder Stellungs-Differenzmessglieder zur Erfassung des jeweiligen Stellungsunterschiedes zwischen dem Istwertzeiger und Sollwertzeiger sowie mit Hilfe geeigneter, ebenfalls an sich üblicher Steuerungsmittel in Rückkopplung auf den Stellantrieb einen Stellungs-Regelkreis zu bilden. Mit einer solchen Regeleinrichtung kann eine vorgewählte Messereinstellung selbsttätig erreicht werden.

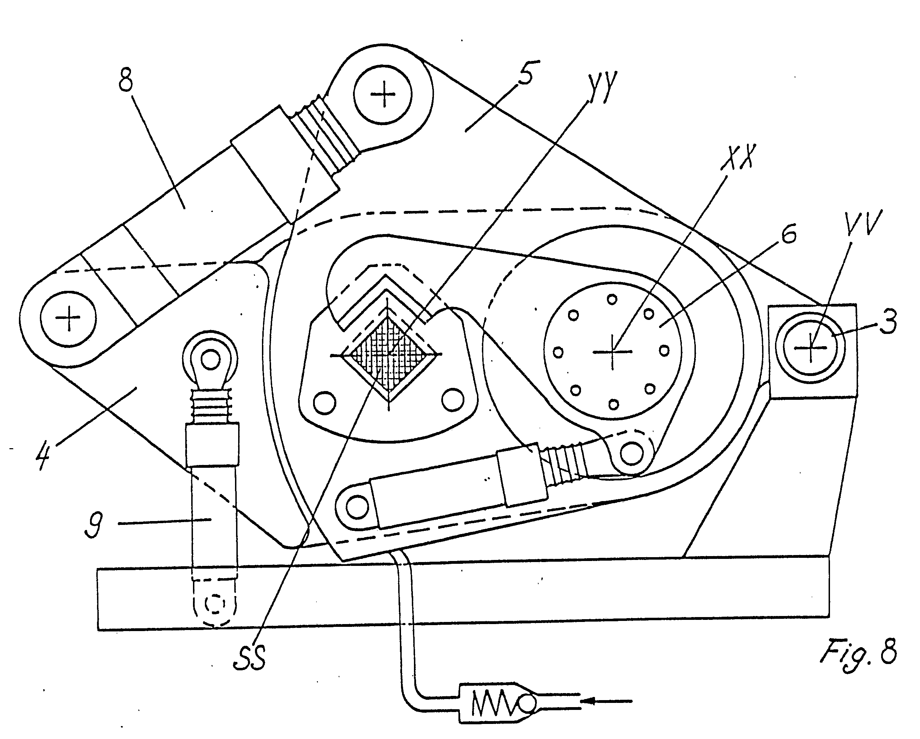

Die Scherenausführung nach Fig. 8 stimmt im wesentlichen mit den Elementen mit der Ausführung nach Fig. 1 überein, zeichnet sich demgegenüber jedoch durch eine besondere Achsanordnung aus. Demgemäss sind die Schnittstelle SS einerseits und das Schwenklager 3 der aus den Messerträgern 4 und 5 bestehenden Baueinheit andererseits bezüglich des Arbeitslagers 6 zueinander gegenüberliegend bzw. diametral angeordnet. Dadurch ergibt sich wie bereits in der Einleitung allgemein erläutert, ein vergleichsweise grosser Abstand zwischen Schwenklager 3 und Schnittstelle SS, d. h. ein vergleichsweise grosser Radius der bogenförmigen Verstellbewegung der Messerkanten. Weiterhin ist aus dieser Darstellung ersichtlich, dass für einen gegebenen Messer-Verstellhub der zugehörige Verstellhub der Achse XX des Arbeitslagers 6 im Vergleich zu der Ausführung nach Fig. 1 bzw. 4 wesentlich vermindert ist. Damit ergibt sich die erwähnte Verminderung der Winkeländerung der Messerkanten bei der Einstellung auf unterschiedliche Profilhöhen des Schneidgutes, so dass gegebenenfalls auf eine Messerverstellung bezüglich der Messerträger verzichtet werden kann.

Im übrigen ist auch bei dieser Ausführung die Schwenkachse VV der Messerträgeranordnung gegen die Achse XX des Arbeitslagers 6 versetzt angeordnet, so dass der Radialabstand zwischen den Achsen VV und SS im Sinne der vorgenannten Linearisierung der bogenförmigen Verstellbewegung unabhängig von dem Hebelarm der Messerträger, d. h. dem Abstand der Achsen XX und YY im Rahmen der verfügbaren Maschinenbreite gewählt werden kann.

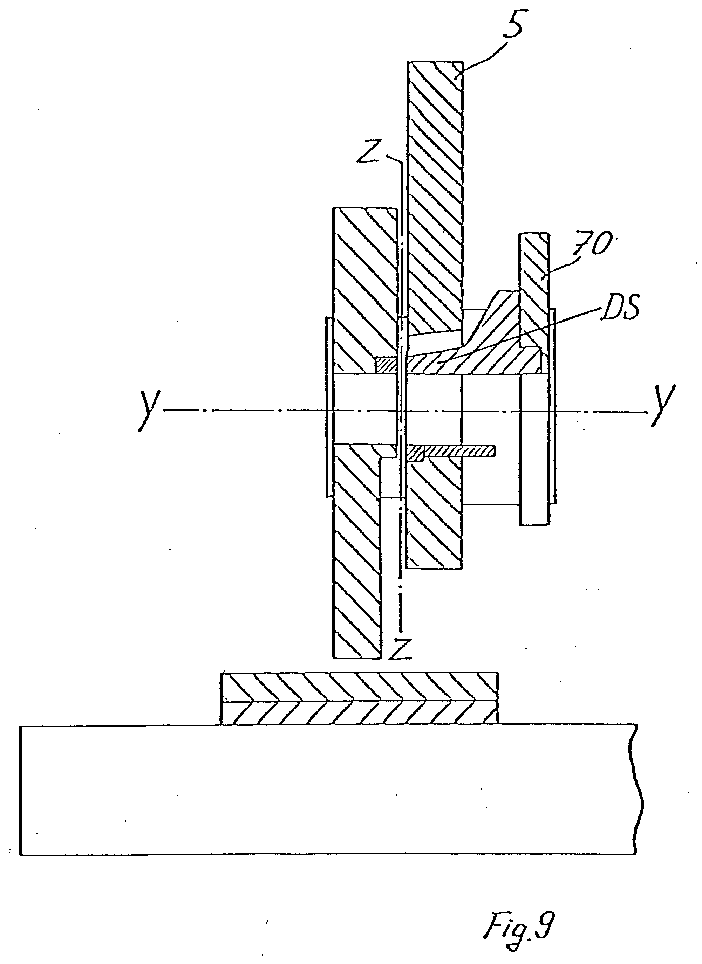

In Fig. 9 ist die ebenfalls bereits in der Einleitung diskutierte Ausführung einer Schere mit einem in den Schnittbereich eingreifenden Niederhalter 70 angedeutet. Letzterer ist beispielsweise wie bei der Ausführung nach Fig. 1 koaxial zur Achse XX des Arbeitslagers 6 und mit diesem auf einem gemeinsamen Achskörper angeordnet. Infolge dessen können die im Niederhalter 70 auftretenden Torsionsmomente infolge des seitlich, d. h. parallel zur Stabachse YY aufkragenden und bis zur Schnittebene ZZ über die Breite des Messerträgers 5 in den Schnittbereich eingreifenden Druckstückes DS konstruktiv einwandfrei aufgenommen werden. Dies ist besonders für die Vermeidung von unerwünscht grossem Abfall beim kopfseitigen Beschneiden von Walzknüppeln und dergleichen von Bedeutung.

**Ansprüche**

1. Schere für stabförmiges Schneidgut, insbesondere zum Ablängen oder Auftrennen von stabförmigen Walzgut, insbesondere Stabknüppeln, mit einer Messerträgeranordnung (4, 5), die zwei in bezug aufeinander drehbar in einem Arbeitslager (6) gelagerte Messerträger (4 bzw. 5) aufweist und die um eine gegen die Mitte der Schnittstelle (SS) versetzte Schwenkachse (VV) beweglich gelagert ist, dadurch gekennzeichnet, dass ein mit der Messerträgeranordnung (4, 5) verbundener und in vorgegebenen Stellungen der Messerträgeranordnung (4, 5) bezüglich der Schwenkachse (VV) feststellbarer Stellantrieb (9) vorgesehen ist und dass mit einem in bezug auf das Maschinengestell eine Schneid-Arbeitsbewegung ausführenden Messerträger (5) ein an dieser Arbeitsbewegung wenigstens abschnittsweise teilnehmender Niederhalter (7) gekuppelt ist.

2. Schere nach Anspruch 1, dadurch gekennzeichnet, dass die Schwenkachse (VV) der Messerträgeranordnung (4, 5) gegen die Achse (XX) des Arbeitslagers (6) versetzt angeordnet ist.

3. Schere nach Anspruch 2, dadurch gekennzeichnet, dass die Schnittstelle (SS) einerseits und das Schwenklager (3) der Messerträgeranordnung andererseits bezüglich des Arbeitslagers (6) wenigstens annähernd zueinander gegenüberliegend angeordnet sind.

4. Schere nach Anspruch 2 oder 3, dadurch gekennzeichnet, dass der Stellantrieb (9) der Messerträgeranordnung an einer Stelle (9a bzw. 9b) der Messerträgeranordnung angreift, die bezüglich der Schnittstelle (SS) wenigstens annähernd gegenüberliegend zum Arbeitslager (6) angeordnet ist.

5. Schere nach einem der vorangehenden Ansprüche, dadurch gekennzeichnet, dass die Achse (VV) des Schwenklagers (3) der Messerträgeranordnung wenigstens annähernd in einer Ebene mit der Mittelachse (YY) der Schnittstelle (SS) und der Achse (XX) der Arbeitslagers (6) angeordnet ist.

6. Schere nach einem der vorangehenden Ansprüche, dadurch gekennzeichnet, dass der erste Messerträger (4) ein oberhalb der Schnittstelle (SS) angeordnetes Messer (11) aufweist und zum Anstellen dieses Messers gegen die Oberseite des schneidenden Stabes (KN) mit dem Schwenk-Feststellantrieb (9) verbunden ist.

7. Schere nach einem der vorangehenden Ansprüche, dadurch gekennzeichnet, dass die Achse (XX) des Arbeitslagers (6), die Mittelachse (YY) der Schnittstelle (SS) und die Angriffsstelle (8a) einer Arbeits-Antriebsvorrichtung (8) an der Messerträgeranordnung wenigstens annähernd in einer Ebene angeordnet sind.

8. Schere nach einem der vorangehenden Ansprüche, dadurch gekennzeichnet, dass die Angriffsstellen (8a, 8b) der Arbeits-Antriebsvorrichtung (8) an den Messerträgern (4, 5) wenigstens annähernd in der Schnittebene (ZZ) angeordnet sind.

9. Schere nach einem der vorangehenden Ansprüche, dadurch gekennzeichnet, dass die Messerträger (4, 5) vorzugsweise unmittelbar, nebeneinanderliegend durch das Arbeitslager (6) miteinander drehbar verbunden und gegen die in Stablängsrichtung im Sinne einer Trennung der Messer (11, 12) wirkende Axialkomponente der Schnittkraft abgestützt sind.

10. Schere nach Anspruch 9, dadurch gekennzeichnet, dass das Arbeitslager (6) der Messerträgeranordnung (4, 5) als die in Stablängsrichtung wirkende Komponente der Schnittkraft aufnehmendes Axialdrucklager ausgebildet ist.

11. Schere nach einem der vorangehenden Ansprüche, dadurch gekennzeichnet, dass für die Messerträger (4, 5) eine spielaufhebende, in Richtung einer gegenseitigen Trennung der Messer (11, 12) wirkende Kippvorspannung in Verbindung mit Anschlagmitteln für die Begrenzung der axialen Messertrennung vorgesehen ist.

12. Schere nach Anspruch 11, dadurch gekennzeichnet, das zur Erzeugung der spielaufhebenden Kippvorrichtung im Bereich des Axialdruck-Arbeitslagers (6) wenigstens zwei bezüglich der Achse (XX) des Arbeitslagers (6) mit radialem Abstand sowie wenigstens annähernd diametral angeordnete, vorzugsweise einstellbare und wenigstens annähernd achsparallel wirkende Anpressvorrichtungen (13, 14) vorgesehen sind.

13. Schere nach Anspruch 10, dadurch gekennzeichnet, dass für die Messerträger (4, 5) eine in Richtung gegen die axiale Messertrennung wirkende Kippspannung vorgesehen ist und dass dieser Anpressung entgegenwirkende Anschlagmittel für die Aufrechterhaltung eines axialen Mindestabstandes der Messerkanten vorgesehen sind.

14. Schere nach einem der vorangehenden Ansprüche, dadurch gekennzeichnet, dass im Bereich des Arbeitslagers (6) und/oder im Bereich der in den Messerträgern (4, 5) angeordneten Messer (11, 12) ein Kühlkanalsystem (KW) angeordnet ist.

15. Schere nach einem der vorangehenden Ansprüche, gekennzeichnet durch eine schwenkbare, wenigstens annähernd koaxial zum Arbeitslager (6) der Messerträger (4, 5) angeordnete Lagerung des Niederhalters (7).

16. Schere nach Anspruch 15, dadurch gekennzeichnet, dass die Messerträger (4, 5) und der Niederhalter (7) auf einem gemeinsamen Arbeitslager-Achskörper gelagert sind.

17. Schere nach einem der vorangehenden Ansprüche, dadurch gekennzeichnet, dass für den Niederhalter (7) ein Feststellantrieb (10) mit einer Rücklaufsperre (10c) vorgesehen ist.

18. Schere nach einem der vorangehenden Ansprüche, dadurch gekennzeichnet, dass der Niederhalter (7) mit einem sich in Richtung parallel zur Stablängsrichtung wenigstens teilweise über die Breite des benachbarten Messerträgers (5) gegen die Schnittebene (ZZ) erstreckenden Druckstück (DS) versehen ist.

19. Schere nach Anspruch 18, dadurch gekennzeichnet, dass die schnittseitige Endkante des Niederhalter-Druckstückes (DS) im Bereich des Schnittebene (ZZ) angeordnet ist.

20. Schere nach einem der vorangehenden Ansprüche, dadurch gekennzeichnet, dass mindestens eines der Messer (11) an dem zugehörigen Messerträger (4) wenigstens annähernd parallel zur Schnittebene und vorzugsweise in Richtung der Arbeitsbewegung verstellbar angeordnet ist.

21. Schere nach Anspruch 20, dadurch gekennzeichnet, dass einer der Messerträger (4) während des Schnittvorganges in einer vorgegebenen Arbeitsstellung festsetzbar sowie mit einem verstellbaren Messer (11) versehen ist.

22. Schere nach Anspruch 20 oder 21, dadurch gekennzeichnet, dass verstellbare Messer (11) in einer Führung (20) am zugehörigen Messerträger (4) gelagert ist und dass eine quer zu dieser Führung (20) wirkende, lösbare und festsetzbare, zwischen Messer (11) und Messerträger (4) wirkende Klemmvorrichtung (30) vorgesehen ist.

23. Schere nach einem der Ansprüche 20 bis 22, dadurch gekennzeichnet, dass für die Verstellbewegung des Messers (11) in bezug auf den zugehörigen Messerträger (4) eine Messeinrichtung (MS) sowie gegebenenfalls eine voreinstellbare Stellungs-Regeleinrichtung für die Arbeitsstellung des Messers (11) in Bezug auf den Messerträger (4) vorgesehen ist.

## Claims

1. Shears for stock in rod or bar form, more particularly for cutting rolled stock in rod or bar form, more particularly rod or bar billets, comprising a blade holder system (4, 5) having two blade holders (4, 5) mounted for rotation relatively to one another in an operative bearing (6) and mounted to be movable about a pivot axis (VV) offset from the centre of the cutting point (SS), characterised in that an adjustment drive (9) is provided, which is connected to the blade holder system (4, 5) and which, when said system (4, 5) is in predetermined positions, is lockable with respect to the pivot axis (VV) and a stock holder (7) which at least by stages takes part in the operative cutting movement is coupled to a blade holder (5) which performs said movement with respect to the machine frame.

2. Shears according to claim 1, characterised in that the pivot axis (VV) of the blade holder system (4, 5) is offset from the axis (XX) of the operative bearing (6).

3. Shears according to claim 2, characterised in that the cutting point (SS) on the one hand and the blade holder system pivot (3), on the other hand, are so disposed with respect to the operative bearing (6) as to be at least approximately opposite one another.

4. Shears according to claim 2 or 3, characterised in that the blade holder system adjustment drive (9) engages a blade holder system point (9a or 9b), which, with respect to the cutting point (SS), is disposed at least approximately opposite the operative bearing (6).

5. Shears according to any one of the preceding claims, characterised in that the axis (VV) of the blade holder system pivot (3) is disposed at least approximately in co-planar relationship with the centre-line (YY) of the cutting point (SS) of the axis (XX) of the operative bearing (6).

6. Shears according to any one of the preceding claims, characterised in that the first blade holder (4) has a blade (11) disposed above the cutting point (SS) and is connected to the pivot locking drive (9) for the purpose of setting said blade against the top of the rod or bar (KN) for cutting.

7. Shears according to any one of the preceding claims, characterised in that the axis (XX) of the operative bearing (6), the centre line (YY) of the cutting point (SS), and the point (8a) of engagement of an operative drive system (8) on the blade holder system are disposed at least approximately in co-planar relationship.

8. Shears according to any one of the preceding claims, characterised in that the points (8a, 8b) of engagement of the operative drive system (8) on the blade holders (4, 5) are disposed at least approximately in the cutting plane (ZZ).

9. Shears according to any one of the preceding claims, characterised in that the blade holders (4, 5) are preferably directly connected for rotation with one another side by side by the operative bearing (6) and are braced against the axial component of the cutting force acting in the longitudinal direction of the bar or rod with the tendency to separate the blades (11, 12).

10. Shears according to claim 9, characterised in that the operative bearing (6) of the blade holder system (4, 5) is in the form of an axial thrust bearing which takes the cutting force component acting in the longitudinal direction of the rod or bar.

11. Shears according to any one of the preceding claims, characterised in that tipping prestressing acting in the direction of separating the blades (11, 12) from one another and eliminating any play is provided for the blade holders (4, 5) in conjunction with stop means for limiting the axial blade separation.

12. Shears according to claim 11, characterised in that at least two biasing devices (13, 14) are provided to produce the play-eliminating tilting system in the region of the axial thrust bearing (6), said biasing devices (13, 14) being radially spaced with respect to the axis (XX) of the operative bearing (6) and being disposed at least approximately diametrically and being preferably adjustable and acting at least approximately in axis-parallel relationship.

13. Shears according to claim 10, characterised in that a tipping stress acting in the direction of axial blade separation is provided for the blade holders (4, 5) and abutment means counteracting this bias are provided for maintaining an axial minimum spacing between the blade edges.

14. Shears according to any one of the preceding claims, characterised in that a cooling duct system (KW) is disposed near the operative bearing (6) and/or near the blades (11, 12) disposed in the blade holders (4, 5).

15. Shears according to any one of the preceding claims, characterised by a pivotable mounting for the stock holder (7), said mounting being disposed at least approximately coaxially of the operative bearing (6) of the blade holders (4, 5).

16. Shears according to claim 15, characterised in that the blade holders (4, 5) and the stock holder (7) are mounted on a common operative bearing shaft member.

17. Shears according to any one of the preceding claims, characterised in that a locking drive (10) with a ratchet type mechanism (10c) is provided for the stock holder (7).

18. Shears according to any one of the preceding claims, characterised in that the stock holder (7) is provided with a pressure member (DS) extending in the direction parallel to the longitudinal direction of the bar or rod at least partially over the width of the adjacent blade holder (5) towards the cutting plane (ZZ).

19. Shears according to claim 18, characterised in that the end edge of the stock holder pressure member (DS) on the cutting side is disposed in the region of the cutting plane (ZZ).

20. Shears according to any one of the preceding claims, characterised in that at least one of the blades (11) is disposed on the associated blade holder (4) so as to be adjustable at least approximately in parallel relationship to the cutting plane and preferably in the direction of the working movement.

21. Shears according to claim 20, characterised in that one of the blade holders (4) is lockable in a predetermined operative position during the cutting operation and is provided with an adjustable blade (11).

22. Shears according to claim 20 or 21, characterised in that the adjustable blade (11) is mounted in a guide (20) on the associated blade holder (4) and a releasable and lockable clamping device (30) acting transversely of said guide (20) is provided and is operative between the blade (11) and the blade holder (4).

23. Shears according to any one of claims 20 to 22, characterised in that for the adjustment movement of the blade (11) with respect to the associated blade holder (4) there is provided a measuring device (MS) and, if required, a presettable position control means for the operative position of the blade (11) in respect of the blade holder (4).

**Revendications**

1. Cisaille pour matériau en barres à couper, notamment pour le tronçage ou la subdivision d'un produit laminé en forme de barres, notamment des billettes en forme de barres, comportant un dispositif porte-couteau (4, 5), qui comporte deux porte-couteau (4 ou 5) montés de façon à pouvoir pivoter l'un par rapport à l'autre dans un palier de travail (6) et qui est monté mobile autour d'un axe de basculement (BV) décalé vers le milieu de la zone de coupe (SS), caractérisée par le fait qu'il est prévu un mécanisme de réglage (9) relié au dispositif porte-couteau (4, 5) et pouvant être fixé par rapport à l'axe de basculement (BV), pour des positions prédéterminées du dispositif porte-couteau (4, 5), et qu'à un porte-couteau (5), exécutant un déplacement de travail de coupe par rapport au bâti de la machine, est accouplé un serre-flan (7) participant au moins par sections à ce déplacement de travail.

2. Cisaille suivant la revendication 1, caractérisée par le fait que l'axe de basculement (VB) du dispositif des porte-couteau (4, 5) est disposé en étant décalé vers l'axe (XX) du palier de travail (6).

3. Cisaille suivant la revendication 2, caractérisée par le fait que la zone de coupe (SS) d'une part et le palier basculant (3) du dispositif du porte-couteau d'autre part sont disposés au moins approximativement à l'opposé l'un de l'autre par rapport au palier de travail (6).

4. Cisaille suivant la revendication 2 ou 3, caractérisée par le fait que le mécanisme de réglage (9) du dispositif porte-couteau attaque ce dernier en un emplacement (9a ou 9b) qui est disposé au moins approximativement à l'opposé du palier de travail (6), par rapport à la zone de coupe (SS).

5. Cisaille suivant l'une des revendications précédentes, caractérisée par le fait que l'axe (VV) du palier basculant (3) du dispositif porte-couteau est disposé au moins approximativement dans un plan passant par l'axe médian (YY) de la zone de coupe (SS) et par l'axe (XX) du palier de travail (6).

6. Cisaille suivant l'une des revendications précédentes, caractérisée par le fait que le premier porte-couteau (4) comporte un couteau (11) situé au-dessus de la zone de coupe (SS), et est relié au mécanisme (9) de réglage avec blocage en position basculée pour appliquer ce couteau contre la face supérieure de la barre (KN) devant être coupée.

7. Cisaille suivant l'une des revendications précédentes, caractérisée par le fait que l'axe (XX) du palier de travail (6), l'axe médian (YY) de la zone de coupe (SS) et le point (8a) d'attaque d'un dispositif (8) d'entraînement de travail sur le dispositif des porte-couteau sont situés au moins approximativement dans un plan.

8. Cisaille suivant l'une des revendications précédentes, caractérisée par le fait que les points d'attaque (8a, 8b) du dispositif (8) d'entraînement de travail sur les porte-couteau (4, 5) sont disposés au moins approximativement dans le plan de coupe (ZZ).

9. Cisaille suivant l'une des revendications précédentes, caractérisée par le fait que les porte-couteau (4, 5) sont reliés l'un à l'autre, de préférence directement, de façon à pouvoir être entraînés côte à côte en rotation par le palier de travail (6) et sont soutenus à l'encontre de la composante axiale de la force de coupe, qui agit suivant la direction longitudinale de la barre dans le sens d'une séparation des couteaux (11, 12).

10. Cisaille suivant la revendication 9, caractérisée par le fait que le palier de travail (6) du dispositif porte-couteau (4, 5) est réalisé sous la forme d'un palier de butée axial supportant la composante de la force axiale agissant suivant la direction longitudinale de la barre.

11. Cisaille suivant l'une des revendications précédentes, caractérisée par le fait qu'il est prévu pour les porte-couteau (4, 5) une précontrainte de basculement, supprimant le jeu et agissant dans le sens d'une séparation réciproque des couteaux (11, 12), en liaison avec des moyens de butée servant à limiter la séparation axiale des couteaux.

12. Cisaille suivant la revendication 11, caractérisée par le fait que pour produire la précontrainte de basculement supprimant le jeu dans la région du palier de butée axial de travail (6), il est prévu au moins deux dispositifs de serrage (13, 14) disposés au moins approximativement diamétralement, avec un jeu radial par rapport à l'axe (XX) du palier de travail (6), de préférence réglables et agissant au moins approximativement avec leurs axes en parallèle.

13. Cisaille suivant la revendication 10, caractérisée par le fait qu'il est prévu pour les porte-couteau (4, 5) une contrainte de basculement agissant à l'encontre de la séparation axiale des couteaux et qu'il est prévu des moyens de butée agissant à l'encontre de ce serrage, pour réaliser le maintien d'un écart axial minimal entre les arêtes des couteaux.

14. Cisaille suivant l'une des revendications précédentes, caractérisée par le fait qu'un système de canaux de refroidissement (KW) est disposé dans la région du palier de travail (6) et/ou dans la région des couteaux (11, 12) disposés dans les porte-couteau (4, 5).

15. Cisaille suivant l'une des revendications précédentes, caractérisée par un dispositif basculant de tourillonnage du serre-flan (7), qui est disposé au moins approximativement coaxialement avec le palier de travail (6) des porte-couteau (4, 5).

16. Cisaille suivant la revendication 15, caractérisée par le fait que les porte-couteau (4, 5) et le serre-flan (7) sont montés sur un corps d'axe commun du palier de travail.

17. Cisaille suivant l'une des revendications précédentes, caractérisée par le fait qu'il est prévu pour le serre-flan (7), un mécanisme de blocage (10) comportant un organe de blocage anti-retour (10c).

18. Cisaille suivant l'une des revendications précédentes, caractérisée par le fait que le serre-flan (7) est équipé d'un organe de pression (DS) s'étendant suivant une direction parallèle à la direction longitudinale de la barre et au moins partiellement sur la largeur du porte-couteau (5) voisin vers le plan de coupe (ZZ).

19. Cisaille suivant la revendication 18, caractérisée par le fait que l'arête d'extrémité, située du côté de la coupe, de l'organe de pression (DS) du serre-flan est disposée au voisinage du plan de coupe (ZZ).

20. Cisaille suivant l'une des revendications précédentes, caractérisée par le fait qu'au moins l'un des couteaux (11) est disposé sur le porte-couteau associé (4) en étant déplaçable au moins approximativement parallèle au plan de coupe et de préférence suivant la direction du déplacement de travail.

21. Cisaille suivant la revendication 20, caractérisée par le fait que l'un des porte-couteau (4) peut être bloqué dans une position prédéterminée de travail pendant l'opération de coupe et est équipé d'un couteau réglable (11).

22. Cisaille suivant la revendication 20 ou 21, caractérisée par le fait que le couteau mobile (11) est monté dans un guide (20) ménagé sur le porte-couteau associé (4) et qu'il est prévu un dispositif de blocage (30) pouvant être détaché et bloqué, agissant transversalement par rapport à ce guide (20) et ce entre le couteau (11) et le porte-couteau (4).

23. Cisaille suivant l'une des revendications 20 à 22, caractérisée par le fait que pour le déplacement de réglage du couteau (11) par rapport au porte-couteau associé (4), il est prévu un dispositif de mesure (MS) ainsi que, éventuellement, un dispositif préréglable de réglage en position pour la position de travail du couteau (11) par rapport au porte-couteau (4).

Fig.1

0 034 830

0 034 830

Fig.2

0 034 830

Fig. 3

Fig.4

Fig.5

0 034 830

Fig. 6

Fig.7

*Fig. 8*

0 034 830

*Fig.9*